# EUROPÄISCHE PATENTANMELDUNG

(11) **EP 1 074 492 A1**
(43) Veröffentlichungstag der Anmeldung: **07.02.2001**
(21) Anmeldenummer: 00115114.1
(22) Anmeldetag: 12.07.2000
(51) Int. Cl.: B65G 53/46, G01B 7/14

(54) **Zellenradschleuse und Verfahren zum Betreiben derselben**

(30) Priorität: 31.07.1999 DE 19936136
(71) Anmelder: Waeschle GmbH, 88250 Weingarten (DE)
(72) Erfinder: Boritzki, Jörg, 88376 Königseggwald (DE)
(74) Vertreter: Hemmelmann, Klaus

(57) **Zusammenfassung**

Eine Zellenradschleuse zum Fördern oder Dosieren von Schüttgut umfaßt ein Gehäuse (1) mit einem Zulaufschacht (2), einem Auslaufschacht (3) und einem in einer Gehäusebohrung (4) drehbar angeordneten Zellenrad (5), dessen Abstand zur Gehäusebohrung veränderbar ist. Es sind Mittel (12) zur Messung des Abstandes zwischen Zellenrad und Gehäusebohrung vorhanden, wobei das Zellenrad und/oder die Gehäusebohrung in Abhängigkeit vom Meßwert zumindest örtlich radial verformbar sind.

Die Erfindung betrifft weiter ein Verfahren zum Betrieben einer Zellenradschleuse, bei dem der Spalt (11) zwischen der Gehäusebohrung (4) und dem Zellenrad (5) in Abhängigkeit von einem Meßwert verändert wird. Dabei werden der Abstand zwischen Zellenrad und Gehäusebohrung gemessen und die radiale Verformung des Zellenrads und/oder die Gehäusebohrung in Abhängigkeit von der gemessenen Spaltweite geregelt.

## Beschreibung

Die Erfindung betrifft eine Zellenradschleuse zum Fördern oder Dosieren von Schüttgut, umfassend ein Gehäuse mit einem Zulaufschacht, einem Auslaufschacht und einem in einer Gehäusebohrung drehbar angeordneten Zellenrad, dessen Abstand zur Gehäusebohrung veränderbar ist, sowie ein Verfahren zum Betreiben einer Zellenradschleuse.

Zellenradschleusen dienen zum Dosieren oder Fördern von Schüttgut. Im Gehäuse der Schleuse ist ein mit einer Vielzahl von Kammern versehenes Zellenrad drehbar angeordnet, dessen Kammern von oben über den Zulaufschacht des Gehäuses mit Schüttgut befüllt werden. Der Zulaufschacht kann zum Beispiel mit einem Lagersilo verbunden sein. Bei Drehung des Zellenrads wird das Schüttgut über den Auslaufschacht beispielsweise in eine pneumatische Förderleitung eingespeist, in der es mit Hilfe eines Druckgasstroms zu einem Zielort gefördert wird.

Da der Silo in der Regel unter einem geringeren Gasdruck steht als die pneumatische Förderleitung, wird das Zellenrad möglichst dicht in die Gehäusebohrung eingepaßt. Bei der Festlegung der Paßmaße ist jedoch zu berücksichtigen, daß das Zellenrad infolge der Druckdifferenz zwischen Auslauf- und Zulaufschacht radial versetzt wird.

Die Abführung des von den entleerten Kammern aus der Förderleitung nach oben geförderten, komprimierten Druckgases führt außerdem zu einer örtlichen Abkühlung und damit zu einem die Bohrung verkleinernden Verzug des Gehäuses. Ebenso kann bei der Förderung heißer Schüttgüter eine radiale Ausdehnung der Gehäusebohrung auftreten.

Eine gattungsgemäße Zellenradschleuse ist aus der Patentanmeldung EP 0 732 280 A1 bekannt. In diesem Dokument wird eine Zellenradschleuse mit konischem Zellenrad und einer passend ausgebildeten Gehäusebohrung beschrieben, bei welcher der Spalt zwischen Zellenrad und Gehäusebohrung durch axiales Verschieben des Zellenrads in der Gehäusebohrung einstellbar ist. Der Vorschubantrieb des Zellenrads ist mit einer Steuerung versehen, die den Spalt automatisch auf dem kleinstmöglichen Bewegungsspiel hält. Der Vorschubantrieb wird von der Steuerung in regelmäßigen Abständen zur Verkleinerung des verschleißbedingt zunehmenden Spaltes betätigt, wobei das Antriebsmoment für das Zellenrad gemessen wird. Erreicht das Drehmoment durch die zunehmende Reibung des Zellenrads in der Gehäusebohrung einen zuvor festgelegten Sollwert, wird das Zellenrad um einen definierten Weg in axialer Richtung zurückgefahren, so daß das Spaltmaß auf den gewünschten Wert von beispielsweise 0,1 mm herabgesetzt wurde.

Dieses Vorgehen ist mit verschiedenen Nachteilen verbunden. Zum einen kann das vorgeschlagene Verfahren nur bei Schleusen mit konischem Zellenrad Anwendung finden, da bei Zellenradschleusen mit zylindrischer Gehäusebohrung bei axialer Verschiebung des Zellenrads keine Veränderung der Spaltweite auftritt. Andererseits ist es unumgänglich, daß sich Zellenrad und Gehäusebohrung in der Bewegung zeitweise berühren, was bei bestimmten Reibpaarungen, beispielsweise Edelstahl/Edelstahl bereits zur Zerstörung der betroffenen Oberflächen führen kann.

In der Druckschrift DE 298 19 747 U1 wird offenbart, daß die radiale Ausdehnung der Gehäusebohrung lokal durch örtliches Beheizen des Gehäuses beeinflußt werden kann. Mit dem Beheizen wird einer Verkleinerung des Durchmessers der Gehäusebohrung entgegengewirkt, die auf die Entspannung von Fördergas bei der Ableitung des Leckgasstroms aus der Zellenradschleuse und der damit verbundenen Abkühlung von Gas und Gehäuse zurückzuführen ist. Eine Messung der tatsächlichen Spaltweite erfolgt nicht.

Aus der Offenlegungsschrift DE 23 39 135 A1 ist ferner bekannt, den Durchmesser des Zellenrads durch das Aufblasen speziell ausgebildeter, schlauchartiger Bauteile zu verändern, die radial außen an den Stegen angeordnet sind. Das Zellenrad wird bei Stillstand der Schleuse so weit vergrößert, daß es dichtend in der Gehäusebohrung anliegt. Der Einsatz eines zusätzlichen Absperrschiebers ist zur Abdichtung daher nicht erforderlich. Vor dem Betrieb der Schleuse werden die schlauchartigen Dichtungen mit Druckluft beaufschlagt, wobei sie sich, bedingt durch ihre besondere Formgebung, von der Gehäusebohrung abheben.

Eine weitere gattungsgemäße Zellenradschleuse wird in der Patentschrift AT 279 482 beschrieben. Die Gehäusebohrung ist mit einer verformbaren, schlauchförmigen Innenverkleidung aus Gummi oder einem elastischen Kunststoff versehen, die durch Zuführen eines Druckmediums in den Spalt zwischen Gehäuse und Innenverkleidung radial nach innen gegen den Umfangs des Zellenrads gepreßt wird und an den Stegen dichtend anliegt.

Eine Berührung zwischen den bewegten Stegen des Zellenrads und dem stationären Gehäuse ist jedoch aus den zuvor genannten Gründen bei der ausschließlichen Verwendung metallischer Werkstoffe nicht zulässig.

### Aufgabe

Der Erfindung liegt die Aufgabe zugrunde, das Spaltmaß zwischen Zellenrad und Gehäusebohrung in jedem Betriebszustand, also auch beim Anfahren der Schleuse auf ein möglichst kleines Maß zu verringern, wobei eine Berührung der Oberflächen vermieden werden soll.

### Lösung

Die Aufgabe wird dadurch gelöst, daß Mittel zur Messung des Abstandes zwischen Zellenrad und Gehäusebohrung vorhanden sind und das Zellenrad und/oder die Gehäusebohrung in Abhängigkeit vom Meßwert radial verformbar sind.

Diese radiale Verformung wird bevorzugt durch lokales oder vollumfängliches Temperieren, also Beheizen oder Kühlen des Zellenrads und/oder des Gehäuses bewirkt.

Nach einer weiteren Ausführung der Ausführung werden Hohlräume im Zellenrad und/oder Gehäuse mit einem Druckfluid, also einem Druckgas oder einer Druckflüssigkeit beaufschlagt.

Bevorzugt kann das Gehäuse im Bereich der Gehäusebohrung als Ringblech ausgebildet werden, daß unter der Einwirkung äußerer Kräfte elliptisch verformbar ist.

Alternativ ist es möglich, das Gehäuse im Bereich der Gehäusebohrung ein- oder mehrfach zu teilen, wobei die Teilungsflächen zur Erzeugung der radialen Verformung gegeneinander verschiebbar sind. Dabei kann das Gehäuse im Bereich der Gehäusebohrung nach einer besonderen Ausführung der Erfindung als längsgeteiltes Blech ausgebildet sein, dessen Endstücke zueinander in Umfangsrichtung verschiebbar sind. Eine weitere Möglichkeit der Erfindung besteht darin, die Teile des Gehäuses über in Umfangsrichtung verformbare Zwischenlagen zu beabstanden.

Erfindungsgemäß wird eine Zellenradschleuse in der Weise betrieben, daß der Abstand zwischen Zellenrad und Gehäusebohrung gemessen und die radiale Verformung des Zellenrads und/oder der Gehäusebohrung in Abhängigkeit von der gemessenen Spaltweite geregelt wird.

Die Abstandsmessung kann beispielsweise induktiv oder berührend erfolgten.

### Figuren

Die Figuren stellen beispielhaft und schematisch verschiedene Ausführungen der Erfindung dar.

Es zeigen:
- Fig. 1: eine erfindungsgemäße Zellenradschleuse nach Anspruch 1 im Querschnitt
- Fig. 2: eine weitere Zellenradschleuse nach Anspruch 2
- Fig. 3: eine bevorzugte Ausführungsform der Erfindung nach Anspruch 4
- Fig. 4: eine Zellenradschleuse nach Anspruch 7
- Fig. 5: eine weitere erfindungsgemäße Zellenradschleuse nach Anspruch 6
- Fig. 6: eine nach Anspruch 3 ausgebildete Zellenradschleuse
- Fig. 7: eine Zellenradschleuse mit einer berührenden Messung des Abstands zwischen dem Zellenrad und der Gehäusebohrung im Längsschnitt

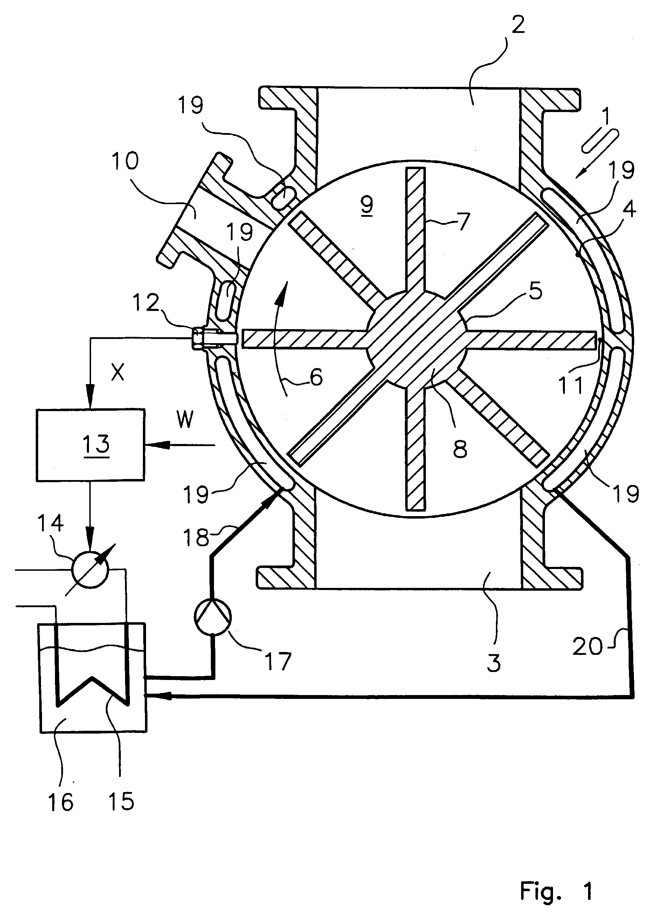

Die in Fig. 1 dargestellte Zellenradschleuse umfaßt ein Gehäuse 1 mit einem Zulaufschacht 2 und einem Auslaufschacht 3 für das Schüttgut. Der Zulaufschacht kann beispielsweise an einen Schüttgutsilo angeschlossen sein, während der Auslaufschacht in eine pneumatischen Förderleitung mündet. In der an sich kreisrunden, insbesondere kreiszylindrischen Gehäusebohrung 4 ist ein Zellenrad 5 in Richtung des Pfeiles 6 drehbar gelagert. Das Zellenrad ist mit einer Vielzahl von Stegen 7 versehen, die sich radial von der Welle 8 des Zellenrads 5 in Richtung der Gehäusebohrung 4 erstrecken. Die Stege 7 bilden Zellen 9 aus, die bei Drehung des Zellenrads 5 Schüttgut aus dem Zulaufschacht 2 entnehmen und in den Auslaufschacht 3 überführen. Im Gegenzug entnehmen sie dem Auslaufschacht 3, sofern er unter pneumatischem Überdruck steht, eine Menge komprimierten Fördergases, das vor erneutem Erreichen des Zulaufschachts 2 über eine Entlüftungsöffnung 10 auf den Druck im Zulaufschacht 2, also in der Regel auf den atmosphärischen Druck entspannt wird. Um die Strömung von Druckgas vom Auslaufschacht 3 zum Zulaufschacht 2 gering zu halten, ist das Zellenrad 5 mit sehr geringem Untermaß in die Gehäusebohrung 4 eingepaßt, so daß sich zwischen den Stegen 7 und der Gehäusebohrung 4 enge Spalte 11 mit einem Spaltmaß von wenigen Zehnteln Millimeter ausbilden, die der Gasströmung einen hohen Strömungswiderstand entgegensetzen.

Im Gehäuse 1 ist ein induktiver Sensor 12 eingesetzt, mittels dessen der Abstand zwischen der ortsfest mit ihm verbundenen Gehäusebohrung 4 und den an ihm vorbeidrehenden Stegen 7 meßbar ist. Der Meßwert X des zu regelnden Spaltmaßes wird in einem Regler 13 mit einer Solivorgabe W verglichen, die beispielsweise dem auch bei einer Regelung der Spaltweite unerläßlichen Sicherheitsabstand zwischen Zellenrad 5 und Gehäusebohrung 4 entspricht. Der Regler 13 gibt ein Stellsignal Y an ein Potentiometer 14 ab, über das die Heizleistung einer elektrischen Heizschlange 15 veränderbar ist. Die Heizschlange 15 führte einem Ölbad 16 Wärme zu. Das temperierte Öl wird aus dem Ölbad 16 mittels einer Pumpe 17 über eine Zuleitung 18 in miteinander kommunizierende Hohlräume 19 im Gehäuse 1 gepumpt, in denen das Öl seine Wärme an das Gehäuse 1 abgibt. Über eine Rückleitung 20 fließt das Öl in das Ölbad 16 zurück.

Durch die im Ausführungsbeispiel vollumfängliche Temperierung des Gehäuses 1 dehnt sich dieses radial aus. Wird mit der Zellenradschleuse beispielsweise heißes Schüttgut gefördert, durch welches das Zellenrad 5 beim Anfahren der Schleuse erwärmt und dadurch im Durchmesser vergrößert wird, kann der Durchmesser der Gehäusebohrung 4 dieser Vergrößerung folgen. Das Zellenrad 5 dichtet in jedem Betriebszustand, also auch beim Stillstand der Schleuse optimal ab, ohne daß die Gefahr einer Berührung zwischen Zellenrad 5 und der Gehäusebohrung 4 besteht. Ebenso werden auf Umgebungseinflüsse wie Zugluft oder Temperatur zurückzuführende Durchmesseränderungen der Gehäusebohrung 4 stets so ausgeglichen, daß die Schleuse eine möglichst hohe Dichtigkeit aufweist.

Anstelle oder zusätzlich zur Heizschlange 15 kann selbstverständlich auch eine Kühlvorrichtung im Ölbad 16 vorgesehen werden.

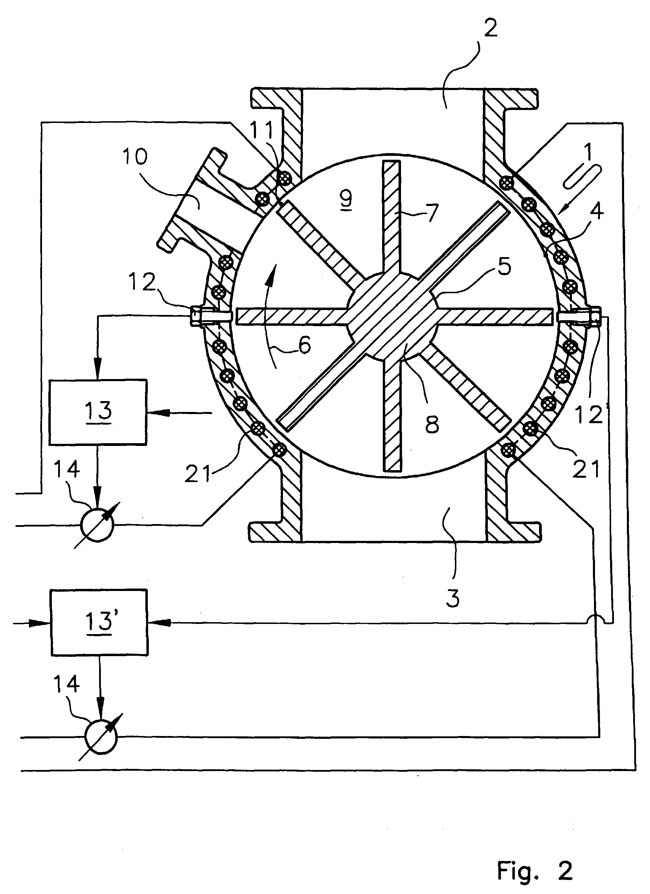

Die Zellenradschleuse nach Fig. 2 unterscheidet sich von der zuvor beschriebenen Ausführung dadurch, daß die Temperierung durch unmittelbar in das Gehäuse 1 eingesetzte elektrische Heizstäbe 21 erfolgt, deren Heizleistung jeweils für die abdrehende und aufdrehende Hälfte des Gehäuses 1 getrennt einstellbar ist. Dazu werden in beiden Hälften des Gehäuses 1 die Spaltmaße gesondert über Sensoren 12, 12' ermittelt, die mit separaten Reglern 13, 13' verbunden sind.

Auf diese Weise kann gezielt die erhöhte Abkühlung der aufdrehenden Hälfte des Gehäuses 1 ausgeglichen werden, die auf die Entspannung des Druckgases im Bereich der Entlüftungsöffnung 10 zurückzuführen ist.

In den nachfolgenden Figuren, die weitere Ausführungsformen erfindungsgemäßer Zellenradschleusen zeigen, wird auf die Darstellung der Regelkreise verzichtet.

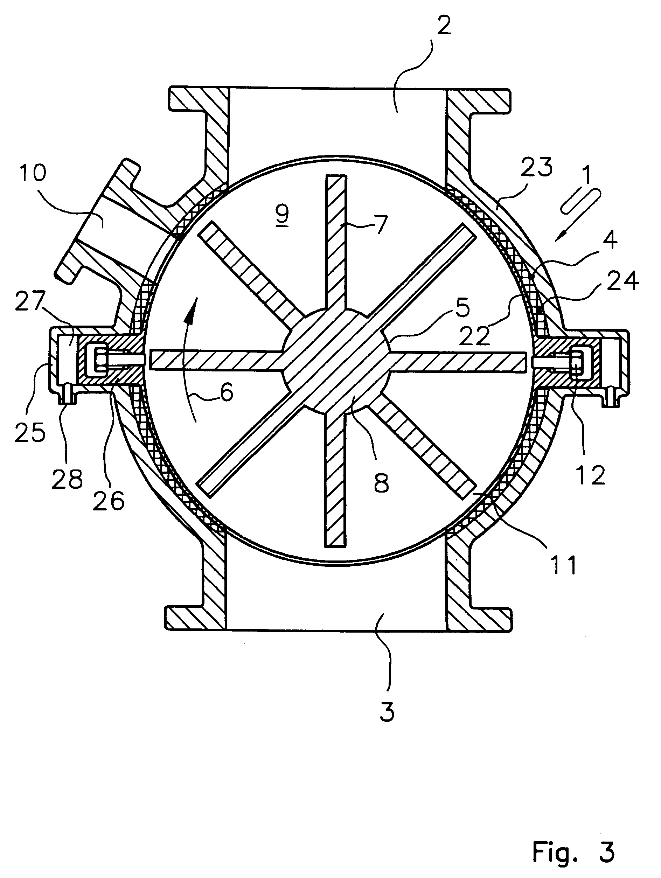

Das Gehäuse 1 der Zellenradschleuse nach Fig. 3 ist im Bereich der Gehäusebohrung mit einem bis auf die Ausschnitte für Zulaufschacht 2 und Auslaufschacht 3 geschlossenen Ringblech 22 ausgekleidet, das zum Grundkörper 23 des Gehäuses 1 über eine elastische Zwischenlage 24 beabstandet ist. Der Grundkörper 23 bildet seitlich Zylinder 25 aus, in denen mit dem Ringblech einstückig verbundene Kolben 26 beweglich angeordnet sind. Wird den zwischen Kolben 26 und Zylinder 25 befindlichen Druckräumen 27 über den Anschluß 28 ein Druckfluid zugeführt, verformt sich die Gehäusebohrung 4 in ellipsenähnlicher Weise, wobei sich der Abstand zum Zellenrad bereichsweise verkleinert, andernorts jedoch vergrößert. In den Bereichen, in denen zu Erzielung der Dichtigkeit ein möglichst geringes Spaltmaß angestrebt wird, sind die Sensoren 12 angeordnet. Im Ausführungsbeispiel befinden sie sich direkt im Kolben 26, durch dessen Verschiebung die radiale Ausdehnung der Gehäusebohrung 4 im Meßbereich unmittelbar minimiert werden kann. Im Bereich des Zulaufschacht 2 und Auslaufschachts 3 vergrößert sich der Durchmesser der Gehäusebohrung, ohne daß diese Vergrößerung wegen der an diesen Orten ohnehin erforderlichen Ausnehmungen in der Gehäusebohrung negative Auswirkungen auf die Dichtigkeit der Zellenradschleuse hat.

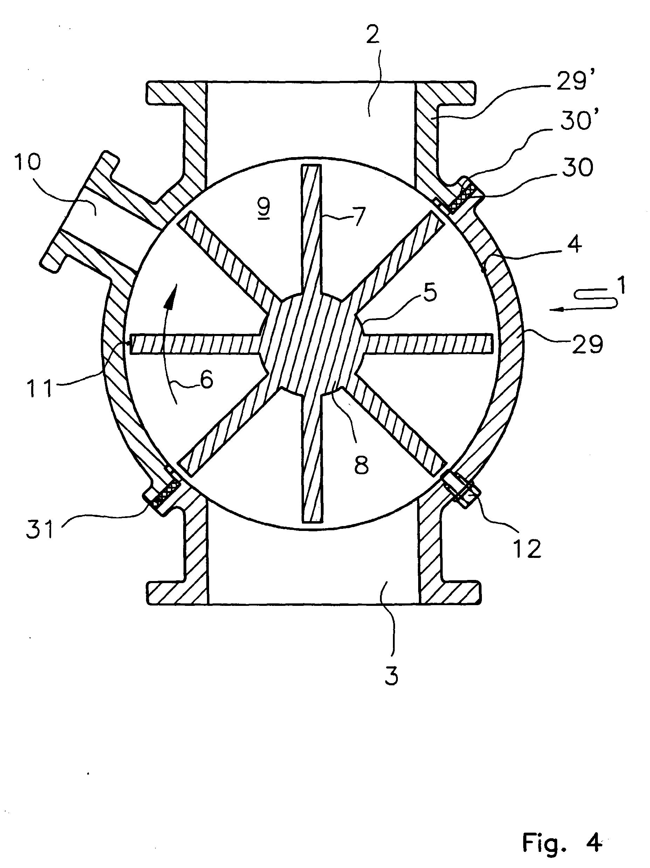

Bei der Zellenradschleuse nach Fig. 4 ist das Gehäuse 1 durch Längsteilung in zwei Segmente 29, 29'unterteilt. Die Segmente 29, 29' sind im Bereich der Teilungsflächen 30, 30' gegeneinander in Umfangsrichtung verschieblich, die durch ein Verformungselemente 31 zueinander beabstandet sind. Der Abstand der Teilungsflächen 30, 30' wird durch die Ausdehnung der Verformungselemente 31 verändert, wodurch die Gehäusebohrung 4 in der Art eines Langlochs radial erweiterbar ist. Als Verformungselemente 31 können beispielsweise hydraulische Kissen oder durch Anlegen von Strom erwärmbare und somit sich ausdehnende elektrische Widerstände dienen.

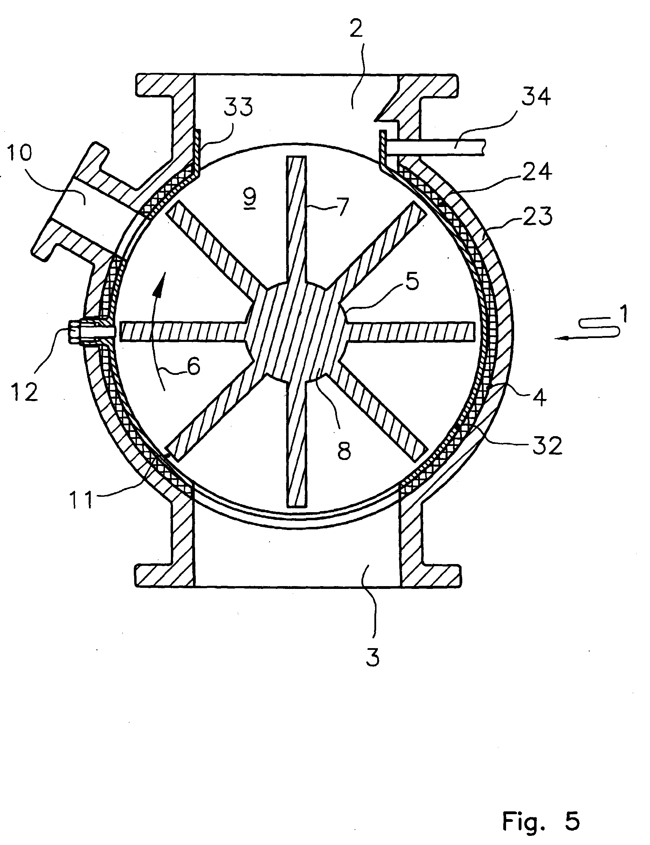

Fig. 5 zeigt eine Zellenradschleuse, bei der die Gehäusebohrung 4 als längsgeteiltes Blech 32 ausgebildet ist, das über eine elastische Zwischenlage 24 vom Grundkörper 23 des Gehäuses 1 getrennt ist. Das aufgekantete Endstück 33 des Blechs 32 ist schlüssig mit dem Zulaufschacht 2 verbunden, während das Endstück 33' mit Hilfe einer den Zulaufschacht 2 durchdringenden Stange 34 in Umfangsrichtung zum Endstück 33 hin verschiebbar ist. Der Durchmesser der Gehäusebohrung 4 wird dadurch verringert, ohne daß diese eine wesentliche Abweichung von der Kreisform erfährt. Der Sensor 12 ist im Blech 32 verschraubt und wird bei der Verformung der Gehäusebohrung 4 mitgeführt.

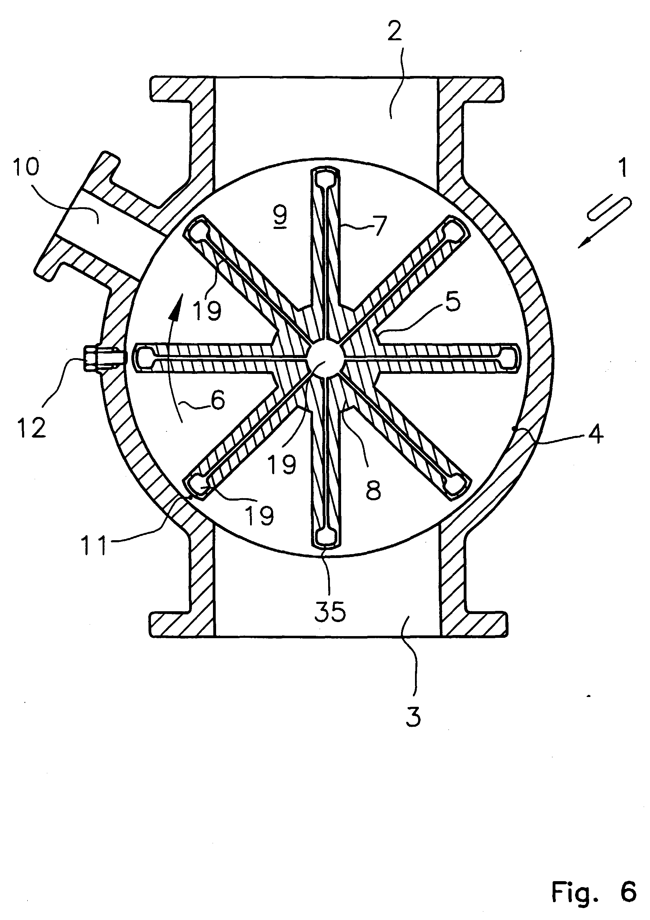

Bei der in Fig. 6 dargestellten Zellenradschleuse ist das Zellenrad 5 radial verformbar, während die Gehäusebohrung 4 einen nicht veränderlichen Durchmesser aufweist. Die Welle 8 des Zellenrads und die Stege 7 weisen Hohlräume 19 auf, die einem Druckfluid beaufschlagt werden können. Die radialen Endflächen 35 der Stege 7 sind membranartig ausgebildet und können durch Erhöhung des Drucks in den Hohlräumen 19 zur Gehäusebohrung 4 hin gewölbt werden.

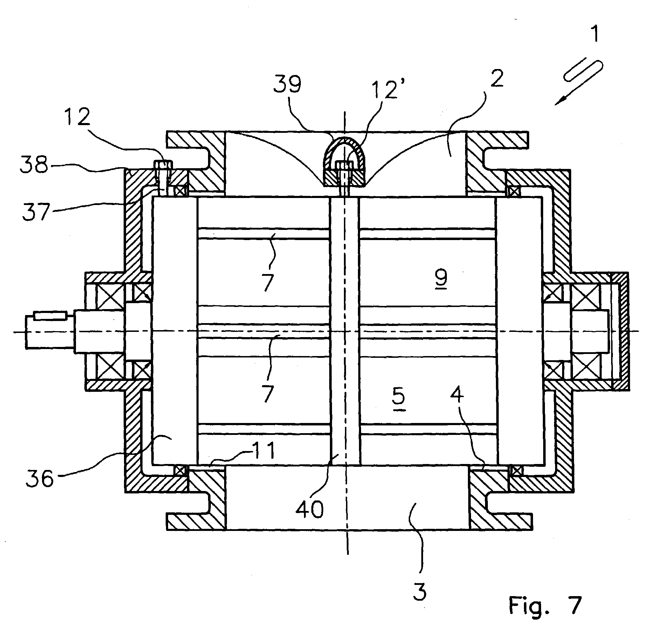

Fig. 7 zeigt eine Zellenradschleuse, bei der die Messung des Spaltmaßes nicht berührungslos, sondern mittels am Zellenrad 5 anliegender Sensoren 12 erfolgt. Das Zellenrad 5 ist seitlich mit Bordscheiben 36 verschlossen, an dessen Umfangsfläche fortwährend ein verschieblicher, mittels Federkraft anpreßbarer Stift 37 des Sensors 12 anliegt. Der Sensor 12 ist im Seitendeckel 38 des Gehäuses 1 verschraubt. Alternativ kann der Sensor 12 in einem dachförmigen Leitelement 39 im Zulaufschacht 2 angeordnet werden, wobei der Stift 37 auf einem Ring 40 läuft, der die Stege 7 in Umfangsrichtung umspannt.

Das Zellenrad kann auch eine von der Zylinderform abweichende, beispielsweise kegel- oder kugelförmige Gestalt aufweisen. Auch kann eine größere Zahl an Sensoren oder verformbaren Segmenten in der Gehäusebohrung oder den Stegen vorgesehen werden. Auch Zellenradschleusen mit einer vertikal ausgerichteten Welle des Zellenrads können mit Erfolg erfindungsgemäß ausgerüstet und betrieben werden.

### Bezugszeichenliste

- 1: Gehäuse
- 2: Zulaufschacht
- 3: Auslaufschacht
- 4: Gehäusebohrung
- 5: Zellenrad
- 6: Pfeil (Drehrichtung)
- 7: Steg
- 8: Welle
- 9: Zelle
- 10: Entlüftungsöffnung
- 11: Spalt
- 12: Sensor
- 13: Regler
- 14: Potentiometer
- 15: Heizschlange
- 16: Ölbad
- 17: Pumpe
- 18: Zuleitung
- 19: Hohlraum
- 20: Rückleitung
- 21: Heizstab
- 22: Ringblech
- 23: Grundkörper
- 24: Zwischenlage
- 25: Zylinder
- 26: Kolben
- 27: Druckraum
- 28: Anschluß
- 29: Segment
- 30: Teilungsfläche
- 31: Verformungselement
- 32: Blech
- 33: Endstück
- 34: Stange
- 35: Endflächen
- 36: Bordscheibe
- 37: Stift
- 38: Seitendeckel
- 39: dachförmiges Leitelement
- 40: Ring

## Patentansprüche

1. Zellenradschleuse zum Fördern oder Dosieren von Schüttgut, umfassend ein Gehäuse (1) mit einem Zulaufschacht (2), einem Auslaufschacht (3) und einem in einer Gehäusebohrung (4) drehbar angeordneten Zellenrad (5), dessen Abstand zur Gehäusebohrung veränderbar ist, dadurch gekennzeichnet, daß Mittel (12) zur Messung des Abstandes zwischen Zellenrad und Gehäusebohrung vorhanden sind und das Zellenrad und/oder die Gehäusebohrung in Abhängigkeit vom Meßwert zumindest örtlich radial verformbar sind.

2. Zellenradschleuse nach Anspruch 1, gekennzeichnet durch Mittel (15, 21) zur Temperierung des Zellenrads und/oder des Gehäuses.

3. Zellenradschleuse nach Anspruch 1 oder 2, dadurch gekennzeichnet, daß das Zellenrad (5) und/oder das Gehäuse (1) Hohlräume (19) aufweisen, die mit einem Druckfluid beaufschlagbar sind.

4. Zellenradschleuse nach einem der Ansprüche 1 bis 3, dadurch gekennzeichnet, daß das Gehäuse (1) im Bereich der Gehäusebohrung (4) als unter der Einwirkung äußerer Kräfte elliptisch verformbares Ringblech (22) ausgebildet ist.

5. Zellenradschleuse nach einem der vorhergehenden Ansprüche, dadurch gekennzeichnet, daß das Gehäuse (1) im Bereich der Gehäusebohrung (4) einoder mehrfach geteilt ist, wobei die Teilungsflächen (30) gegeneinander verschiebbar sind.

6. Zellenradschleuse nach einem der vorhergehenden Ansprüche, dadurch gekennzeichnet, daß das Gehäuse (1) im Bereich der Gehäusebohrung (4) als längsgeteiltes Blech (32) ausgebildet ist, dessen die Endstücke (33) zueinander in Umfangsrichtung verschiebbar sind.

7. Zellenradschleuse nach Anspruch 4 bis 6, dadurch gekennzeichnet, daß die Teile des Gehäuses zueinander über in Umfangsrichtung oder radial verformbare Elemente (24, 31) beabstandet sind.

8. Verfahren zum Betreiben einer Zellenradschleuse, bei dem der Spalt (11) zwischen der Gehäusebohrung (4) und dem Zellenrad (5) in Abhängigkeit von einem Meßwert verändert wird, dadurch gekennzeichnet, daß der Abstand zwischen Zellenrad und Gehäusebohrung gemessen und die radiale Verformung des Zellenrads und/oder die Gehäusebohrung in Abhängigkeit von der gemessenen Spaltweite geregelt wird.

9. Verfahren nach Anspruch 8, dadurch gekennzeichnet, daß der Abstand induktiv gemessen wird.

10. Verfahren nach Anspruch 8, dadurch gekennzeichnet, daß der Abstand berührend gemessen wird.
